# EUROPEAN PATENT APPLICATION

(11) **EP 1 762 573 A1**
(43) Date of publication of application: **14.03.2007**
(21) Application number: 05019501.5
(22) Date of filing: 08.09.2005
(51) Int. Cl.: C07F 9/655

(54) **A process for the preparation of fosfomycin salts**

(71) Applicant: Interquim, S.A. De C.V., 54730 Cuautitlan Izcalli (MX)
(72) Inventor: Casazza, Bruno c/o Interquim, S.A. DE C.V., Ind. Cuamatla 54730 Cuatitlan Izcalli (MX)
(74) Representative: Bianchetti, Giuseppe

(57) **Abstract**

A process for the preparation of fosfomycin trometamol, which comprises the reaction between fosfomycin disodium salt and a tromethamine acid salt with a carboxylic acid in a substantially anhydrous alcoholic solvent.

## Description

The present invention relates to a process for the preparation of mono (2-ammonium-2-hydroxymethyl-1,3-propanediol) (2R,cis)-1,2-epoxypropyl-phosphonate (in the following referred to as trometamol).

Fosfomycin trometamol is a drug which has been used for a long time in the therapy of infections of the genitourinary tract and is disclosed in EP 27597.

Fosfomycin, namely (2R,cis)-1,2-epoxypropyl-phosphonic acid, is an antibiotic isolated from *Streptomyces* strains which has antibacterial activity in particular against Gram-negative bacteria, which are the mainly responsible for the infections of the urinary tract. The presence of an epoxy ring makes fosfomycin sensitive to hydrolysis in aqueous media where the corresponding diol can form.

A number of processes for the preparation of fosfomycin trometamol are known, besides that disclosed in EP 27597, which describes the reaction of bis-(2-ammonium-2-hydroxymethyl-1,3-propanediol) (2R,cis)-1,2-epoxypropyl-phosphonate with para-toluenesulfonic acid in ethanol.

bis-(2-Ammonium-2-hydroxymethyl-1,3-propanediol) (2R,cis)-1,2-epoxypropyl-phosphonate is disclosed in GB 2025975.

Another process is described in ES 511527, starting from the mono salt of (+)-alpha-phenethylamine of fosfomycin with tromethamine and sulfonic acid.

US 5162309 discloses a process for the preparation of fosfomycin trometamol again starting from bis-(2-ammonium-2-hydroxymethyl-1,3-propanediol) (2R,cis)-1,2-epoxypropyl-phosphonate, methanesulfonic acid and fosfomycin (+)-alpha-phenethylamine mono salt in almost stoichiometric amounts, in the presence of small amounts of tromethamine and under precise stirring conditions.

Other processes envisage the use of different salts such as the calcium or diphenylethylamine salt.

There is therefore the need for a simple, inexpensive process for the preparation of fosfomycin trometamol under conditions preventing the epoxide ring from opening to form the diol.

It has now been found that said objects are attained by a process which comprises the reaction between fosfomycin disodium salt and a tromethamine acid salt with a carboxylic acid in a substantially anhydrous alcoholic solvent.

The tromethamine acid salt is preferably selected from salts with polycarboxylic acids such as mono-oxalate, mono-tartrate, mono-fumarate, mono-maleate. A particularly preferred tromethamine salt is the mono-oxalate. It is anyway possible to use any acid as far as it is capable of dissolving trometamol in an anhydrous alcoholic solvent.

The solvent is preferably methanol, ethanol or isopropanol, more preferably substantially anhydrous methanol.

The expression "substantially anhydrous" means an alcohol with water content lower than 0.5%, preferably lower than 0.2%, more preferably lower than 0.1 %.

Fosfomycin trometamol is obtained in high yields and high purity, substantially or completely free from diol impurities deriving from the ring opening which cannot be detected analytically.

The reaction is carried out preferably at the reflux temperature of the reaction mixture, for times ranging from two to five hours and preferably under inert atmosphere, for example under nitrogen. The reaction mixture is cooled at approx. 2-10°C, then the alcoholic solution concentrated under vacuum and the product is crystallized from, for example, a 1:1 acetone-ethanol mixture.

The following example illustrates the invention in greater detail.

### EXAMPLE

A 500 ml reactor equipped with thermometer, condenser and stirring, is loaded with 25 g (0.1373 mols) of disodium fosfomycin in 200 ml of methanol to obtain a slightly milky suspension, which is refluxed at 60°C-65°C.

Another reactor equipped with thermometer, condenser and stirring, is loaded with 16.75 g (0.1373 mols) of oxalic acid dihydrate and 16.63 g (0.1373 mols) of tromethamine in 150 ml of methanol at 40°C-50°C to complete dissolution.

The temperature of the second reactor is raised to 60°C-65°C, then the solution is gradually added to the first reactor, at the same temperature, thereby obtaining a white precipitate consisting of disodium oxalate. After completion of the addition, heating is interrupted and the mixture is left to slowly cool under continuous stirring at room temperature for 3-4 hours.

The suspension is cooled to 3°C-5°C for approx. 2 hours, then is filtered under nitrogen stream and on a Celite pad. The solution is concentrated under vacuum to a small volume of methanolic solution containing the desired product. The resulting sticky solution is added with 200 ml of a 1/1 acetone-ethanol mixture, under strong stirring, to obtain a white crystal. The mixture is left under strong stirring at room temperature for about 2-3 hours, then filtered under vacuum and under nitrogen stream and the cake is washed with 50-60 ml of absolute ethanol. After drying under vacuum at 40°C-50°C to constant weight, 50-60 g of a white product are obtained.

## Claims

1. A process for the preparation of fosfomycin trometamol, which comprises the reaction between fosfomycin disodium salt and a tromethamine acid salt with a carboxylic acid in a substantially anhydrous alcoholic solvent.

2. A process as claimed in claim 1 wherein the tromethamine acid salt is selected from mono-oxalate, mono-tartrate, mono-fumarate, mono-maleate.

3. A process as claimed in claim 2 in which the tromethamine salt is the mono-oxalate.

4. A process as claimed in any one of claims 1 to 3 in which the solvent is methanol.

5. Fosfomycin trometamol salt obtained by the process of claims 1-4.
